# EUROPEAN PATENT APPLICATION

(11) **EP 3 918 918 A1**
(43) Date of publication of application: **08.12.2021**
(21) Application number: 20178619.1
(22) Date of filing: 05.06.2020
(51) Int. Cl.: A21D 13/24, A21D 13/28, A23G 3/34

(54) **A FOOD GLAZE COATING COMPOSITION**

(71) Applicant: Kerry Luxembourg S.a.r.l., 1820 Luxembourg (LU)
(72) Inventor: NAGHSHINEH, Mahsa, Co. Kildare (IE); KOZYR, Oleksandr, Co. Kildare (IE); HANBIDGE, Alice, Co. Kildare (IE); MCLOUGHLIN, Seamus, Co. Kildare (IE); GOODE, Declan, Co. Kildare (IE); DOYLE, Liam, Co. Kildare (IE)
(74) Representative: FRKelly

(57) **Abstract**

The present invention relates to a food glaze coating composition. The invention also relates to methods of manufacturing food glaze coating compositions, methods of glazing food products, and glazed food products. The present invention provides a food glaze coating composition that is egg-free, non-dairy, and non-protein (non-allergenic) and ready-to-use for food products such as baking products and having desirable functionalities.

## Description

### Field of the Invention

The present invention relates to a food glaze coating composition. The invention also relates to methods of manufacturing food glaze coating compositions, methods of glazing food products, and glazed food products.

### Background to the Invention

Food glazing agents are widely used to form a smooth, shiny, and non-tacky coating on the surface of food products such as yeasted bakery food products (for example, bread, buns, and Viennoiserie-type products) and flour confectionary food products (for example, biscuits, crackers, pies, scones, cookies, and pastries).

Liquid egg wash has classically been used as a food glazing agent. Traditionally, a glaze coating has been imparted to the surface of food products by applying the liquid egg wash to the surface of the food product before the food product is cooked (for example, baked).

Although the conventional liquid egg wash yields a reasonably shiny glaze coating, it has several drawbacks.

The reasonably shiny glaze coating can be inconsistent, providing variation in shine, colour, and flavour; in particular in an industrial environment.

Additionally, in industrial scale application, applicators (for example, spray nozzles) are often clogged due to the presence of egg protein in either liquid egg wash or any egg-based food glazing agent. Cleaning of the clogged applicator and the application facilities such as conveyor belts and trays increases the cleaning time and thereby reduces operational efficiencies.

A liquid egg wash can be easily microbiologically contaminated, and thus requires chilled storage. Resultantly, the liquid egg wash has a short shelf-life, typically four weeks, and must be used shortly after manufacture.

Furthermore, liquid egg wash is not suitable for protein-restricted diets, and is an allergen that is not suitable for a vegan diet.

To overcome some of the drawbacks associated with conventional liquid egg wash, food glazing agents prepared from egg substitutes have been proposed. However, many of the egg substitutes rely on dairy-based proteins (for example, sodium caseinate and whey proteins) and/or plant-based proteins (for example, soy protein and pea protein) to impart a shiny glaze coating.

However, like liquid egg wash, many of the egg substitutes can be inconsistent, often clog industrial scale applicators, have a short shelf-life (for example, weeks) and are not suitable for certain protein-restricted diets.

There is therefore a need to provide a protein-free and/or dairy-free food glaze coating composition that can be applied to food products after the food product is cooked (for example, baked), but which will still provide the required glossy film (shine) that will not transform to a matt appearance and/or will not be tacky/sticky after storage or defrosting.

It is also important that the food glaze coating composition has a useful shelf-life (for example, months) to allow the food glaze coating composition to be stored under ambient conditions.

### Summary of the Invention

According to a first aspect of the present invention, there is provided a food glaze coating composition comprising:
(a) a modified starch;
(b) a gum;
(c) a fat;
(d) an emulsifier; and
(e) a lubricant.

Optionally, the modified starch is a dextrin.

Optionally, the modified starch is selected from modified maize (corn), modified tapioca, modified arrowroot, modified wheat, modified rice, modified pea and modified potato. Further optionally, the modified starch is selected from maize (corn) dextrin, tapioca dextrin, arrowroot dextrin, wheat dextrin, rice dextrin, pea dextrin and potato dextrin.

Optionally, the modified starch is a modified tapioca. Further optionally, the modified starch is a tapioca dextrin.

Preferably, the modified starch is a tapioca dextrin.

Optionally, the modified starch has a dextrose equivalent (DE) of less than 20%, optionally less than 15%, optionally less than 10%, optionally 1-10%, optionally 1-5%, optionally 2-5%, optionally 3-5%, optionally 4%.

Preferably, the modified starch has a dextrose equivalent (DE) of 3-5%.

Optionally, the food glaze coating composition comprises 4-22%(w/w) modified starch, optionally 4-20%(w/w) modified starch, optionally 4-17%(w/w) modified starch, optionally 5-15%(w/w) modified starch, optionally 5-10%(w/w) modified starch, optionally 5-9%(w/w) modified starch, optionally 9%(w/w) modified starch.

Optionally, the food glaze coating composition comprises 4-22%(w/w) dextrin, optionally 4-20%(w/w) dextrin, optionally 4-17%(w/w) dextrin, optionally 5-15%(w/w) dextrin, optionally 5-10%(w/w) dextrin, optionally 5-9%(w/w) dextrin, optionally 9%(w/w) dextrin.

Optionally, the food glaze coating composition comprises 4-22%(w/w) tapioca dextrin, optionally 4-20%(w/w) tapioca dextrin, optionally 4-17%(w/w) tapioca dextrin, optionally 5-15%(w/w) tapioca dextrin, optionally 5-10%(w/w) tapioca dextrin, optionally 5-9%(w/w) tapioca dextrin, optionally 9%(w/w) tapioca dextrin.

Preferably, the food glaze coating composition comprises 9%(w/w) tapioca dextrin.

Preferably, the food glaze coating composition comprises 9%(w/w) tapioca dextrin having a dextrose equivalent (DE) of 3-5%.

Optionally, the food glaze coating composition comprises a natural gum. Further optionally, the food glaze coating composition comprises gum arabic (or gum sudani, acacia gum, arabic gum, gum acacia, or acacia).

Preferably, the food glaze coating composition further comprises gum arabic.

Optionally, the food glaze coating composition further comprises 0.5-10%(w/w) gum, optionally 1-10%(w/w) gum, optionally 5-10%(w/w) gum, optionally 7.5%(w/w) gum.

Optionally, the food glaze coating composition further comprises 0.5-10%(w/w) gum arabic, optionally 1-10%(w/w) gum arabic, optionally 5-10%(w/w) gum arabic, optionally 7.5%(w/w) gum arabic.

Preferably, the food glaze coating composition further comprises 1.0%(w/w) gum arabic.

Optionally, the food glaze coating composition comprises an oil.

Optionally, the food glaze coating composition comprises a saturated fat. Further optionally, the food glaze coating composition comprises a saturated oil.

Alternatively, the food glaze coating composition comprises an unsaturated fat. Further alternatively, the food glaze coating composition comprises an unsaturated oil.

Optionally, the food glaze coating composition comprises a monounsaturated fat. Further optionally, the food glaze coating composition comprises a monounsaturated oil.

Alternatively, the food glaze coating composition comprises a polyunsaturated fat. Further alternatively, the food glaze coating composition comprises a polyunsaturated oil.

Optionally, the food glaze coating composition comprises a vegetable oil.

Optionally, the food glaze coating composition comprises an oil selected from palm, soybean, rapeseed, sunflower, peanut, cottonseed, coconut, and olive.

Preferably, the food glaze coating composition comprises sunflower oil.

Optionally, the fat comprises oleic acid ((9Z)-Octadec-9-enoic acid). Further optionally, the oil comprises oleic acid. Still further optionally, the sunflower oil comprises oleic acid.

Optionally, the fat comprises greater than 10%(w/w), optionally greater than 20%(w/w), optionally greater than 30%(w/w), optionally greater than 40%(w/w), optionally greater than 50%(w/w), optionally greater than 60%(w/w), optionally greater than 65%(w/w), optionally greater than 70%(w/w), optionally greater than 80%(w/w), optionally greater than 82%(w/w), optionally greater than 90%(w/w) oleic acid. Further optionally, the oil comprises greater than 10%(w/w), optionally greater than 20%(w/w), optionally greater than 30%(w/w), optionally greater than 40%(w/w), optionally greater than 50%(w/w), optionally greater than 60%(w/w), optionally greater than 65%(w/w), optionally greater than 70%(w/w), optionally greater than 80%(w/w), optionally greater than 82%(w/w), optionally greater than 90%(w/w) oleic acid. Still further optionally, the sunflower oil comprises greater than 10%(w/w), optionally greater than 20%(w/w), optionally greater than 30%(w/w), optionally greater than 40%(w/w), optionally greater than 50%(w/w), optionally greater than 60%(w/w), optionally greater than 65%(w/w), optionally greater than 70%(w/w), optionally greater than 80%(w/w), optionally greater than 82%(w/w), optionally greater than 90%(w/w) oleic acid.

Preferably, the fat comprises greater than 80%(w/w), optionally 82%(w/w), oleic acid. Further preferably, the oil comprises greater than 80%(w/w), optionally 82%(w/w), oleic acid. Still further preferably, the sunflower oil comprises greater than 80%(w/w), optionally 82%(w/w), oleic acid.

Optionally, the food glaze coating composition comprises 2-15%(w/w) fat, optionally 5-15%(w/w) fat, optionally 5-10%(w/w) fat, optionally 7.5% fat. Further optionally, the food glaze coating composition comprises 2-15%(w/w) oil, optionally 5-15%(w/w) oil, optionally, 5-10%(w/w) oil, optionally 7.5% oil.

Optionally, the food glaze coating composition comprises 2-15%(w/w) sunflower oil, optionally 5-15%(w/w) sunflower oil, optionally 5-10%(w/w) sunflower oil, optionally 7.5% sunflower oil.

Preferably, the food glaze coating composition comprises 7.5% sunflower oil.

Optionally, the food glaze coating composition comprises 7.5% sunflower oil comprising greater than 10%(w/w), optionally greater than 20%(w/w), optionally greater than 30%(w/w), optionally greater than 40%(w/w), optionally greater than 50%(w/w), optionally greater than 60%(w/w), optionally greater than 65%(w/w), optionally greater than 70%(w/w), optionally greater than 80%(w/w), optionally greater than 82%(w/w), optionally greater than 90%(w/w) oleic acid.

Optionally, the food glaze coating composition comprises 7.5% sunflower oil comprising greater than 80%(w/w) oleic acid.

Optionally, the emulsifier comprises a glyceride. Further optionally, the emulsifier comprises a monoglyceride and/or a diglyceride. Still further optionally, the emulsifier comprises a monoglyceride and a diglyceride.

Optionally, the emulsifier comprises a glyceride ester. Further optionally, the emulsifier comprises a monoglyceride ester and/or a diglyceride ester. Still further optionally, the emulsifier comprises a monoglyceride ester and a diglyceride ester.

Optionally, the emulsifier comprises a glyceride acid ester. Further optionally, the emulsifier comprises a monoglyceride acid ester and/or a diglyceride acid ester. Still further optionally, the emulsifier comprises a monoglyceride acid ester and a diglyceride acid ester.

Optionally, the emulsifier comprises a glyceride carboxylic acid ester. Further optionally, the emulsifier comprises a monoglyceride carboxylic acid ester and/or a diglyceride carboxylic acid ester. Still further optionally, the emulsifier comprises a monoglyceride carboxylic acid ester and a diglyceride carboxylic acid ester.

Optionally, the emulsifier comprises a glyceride acetic acid ester. Further optionally, the emulsifier comprises a monoglyceride acetic acid ester and/or a diglyceride acetic acid ester. Still further optionally, the emulsifier comprises a monoglyceride acetic acid ester and a diglyceride acetic acid ester.

Preferably, the emulsifier comprises a monoglyceride acetic acid ester and a diglyceride acetic acid ester. Further preferably, the emulsifier comprises an acetic acid ester of a monoglyceride and a diglyceride.

Optionally, the food glaze coating composition comprises 1-10%(w/w) emulsifier, optionally 5-10%(w/w) emulsifier, optionally 7.5%(w/w) emulsifier.

Optionally, the food glaze coating composition comprises 1-10%(w/w) monoglyceride acetic acid ester and diglyceride acetic acid ester, optionally 5-10%(w/w) monoglyceride acetic acid ester and diglyceride acetic acid ester, optionally 7.5%(w/w) monoglyceride acetic acid ester and a diglyceride acetic acid ester.

Preferably, the food glaze coating composition comprises 7.5%(w/w) monoglyceride acetic acid ester and a diglyceride acetic acid ester.

Optionally, the food glaze coating composition comprises at least one phospholipid. Further optionally, the food glaze coating composition comprises at least one glycerophospholipid (phosphoglyceride). Still further optionally, the food glaze coating composition comprises at least one glycerophospholipid selected from phosphatidylcholine, phosphatidylethanolamine, phosphatidylinositol, phosphatidylserine, and phosphatidic acid.

Optionally, the food glaze coating composition comprises lecithin.

Optionally, the food glaze coating composition comprises 1-10%(w/w) lubricant, optionally 5-10%(w/w) lubricant, optionally 7.5%(w/w) lubricant.

Optionally, the food glaze coating composition comprises 1-10%(w/w) lecithin, optionally 5-10%(w/w) lecithin, optionally 7.5%(w/w) lecithin.

Preferably, the food glaze coating composition comprises 7.5%(w/w) lecithin.

Optionally, the food glaze coating composition further comprises water.

Optionally, the food glaze coating composition further comprises 40-90%(w/w) water, optionally 50-80%(w/w) water, optionally 60-70%(w/w) water, optionally 65%(w/w) water.

Preferably, the food glaze coating composition further comprises 65%(w/w) water.

Optionally, the food glaze coating composition further comprises an antifoaming agent. Further optionally, the food glaze coating composition further comprises a non-silicone antifoaming agent.

Optionally, the food glaze coating composition further comprises 0.1-2.0%(w/w) antifoaming agent, optionally 0.5-2.0%(w/w) antifoaming agent, optionally 1.0-2.0%(w/w) antifoaming agent, optionally 1.5%(w/w) antifoaming agent.

Preferably, the food glaze coating composition further comprises 1.5%(w/w) antifoaming agent.

Optionally, the food glaze coating composition comprises:
(a) a modified starch;
(b) a gum;
(c) an oil;
(d) an emulsifier; and
(e) a lubricant.

Further optionally, the food glaze coating composition comprises:
(a) tapioca dextrin;
(b) gum acacia;
(c) sunflower oil;
(d) monoglyceride acetic acid ester and a diglyceride acetic acid ester; and
(e) lecithin.

Still further optionally, the food glaze coating composition comprises:
(a) tapioca dextrin having a dextrose equivalent (DE) of 3-5%;
(b) gum acacia;
(c) sunflower oil comprising greater than 80%(w/w) oleic acid;
(d) monoglyceride acetic acid ester and a diglyceride acetic acid ester; and
(e) lecithin.

Still further optionally, the food glaze coating composition comprises:
(a) 4-20%(w/w) tapioca dextrin having a dextrose equivalent (DE) of 3-5%;
(b) 0.5-10%(w/w) gum acacia;
(c) 2-15%(w/w) sunflower oil comprising greater than 80%(w/w) oleic acid;
(d) 1-10%(w/w) monoglyceride acetic acid ester and a diglyceride acetic acid ester; and
(e) 1-10%(w/w) lecithin.

Preferably, the food glaze coating composition comprises:
(a) 9%(w/w) tapioca dextrin having a dextrose equivalent (DE) of 3-5%;
(b) 7.5%(w/w) gum acacia;
(c) 7.5%(w/w) sunflower oil comprising greater than 80%(w/w) oleic acid;
(d) 7.5%(w/w) monoglyceride acetic acid ester and a diglyceride acetic acid ester; and
(e) 7.5%(w/w) lecithin.

Optionally, the food glaze coating composition comprises:
(i) 4-20%(w/w) tapioca dextrin having a dextrose equivalent (DE) of 3-5%;
(ii) 0.5-10%(w/w) gum acacia;
(iii) 2-15%(w/w) sunflower oil comprising greater than 80%(w/w) oleic acid;
(iv) 1-10%(w/w) monoglyceride acetic acid ester and a diglyceride acetic acid ester;
(v) 1-10%(w/w) lecithin;
(vi) 40-90%(w/w) water; and
(vii) 0.1-2.0%(w/w) antifoaming agent.

Preferably, the food glaze coating composition comprises:
(i) 9%(w/w) tapioca dextrin having a dextrose equivalent (DE) of 3-5%;
(ii) 1.0%(w/w) gum acacia;
(iii) 7.5%(w/w) sunflower oil comprising greater than 80%(w/w) oleic acid;
(iv) 7.5%(w/w) monoglyceride acetic acid ester and a diglyceride acetic acid ester;
(v) 7.5%(w/w) lecithin;
(vi) 65%(w/w) water; and
(vii) 1.5%(w/w) antifoaming agent.

Optionally, the food glaze coating composition is substantially free of a preservative. Further optionally, the food glaze coating composition is free of a preservative.

Optionally, the food glaze coating composition is substantially free of a sodium stearoyl lactylate (sodium 2-(2-octadecanoyloxypropanoyloxy)propanoate). Further optionally, the food glaze coating composition is free of a sodium stearoyl lactylate (sodium 2-(2-octadecanoyloxypropanoyloxy)propanoate).

According to a second aspect of the present invention, there is provided a method of manufacturing a food glaze coating composition, the method comprising the step of admixing a modified starch; a gum; a fat; an emulsifier; and a lubricant.

Optionally, the method comprises the step of admixing: tapioca dextrin; gum acacia; sunflower oil; monoglyceride acetic acid ester and a diglyceride acetic acid ester; and lecithin.

Further optionally, the method comprises the step of admixing: tapioca dextrin having a dextrose equivalent (DE) of 3-5%; gum acacia; sunflower oil comprising greater than 80%(w/w) oleic acid; monoglyceride acetic acid ester and a diglyceride acetic acid ester; and lecithin.

Still further optionally, the method comprises the step of admixing: 4-20%(w/w) tapioca dextrin having a dextrose equivalent (DE) of 3-5%; 0.5-10%(w/w) gum acacia; 2-15%(w/w) sunflower oil comprising greater than 80%(w/w) oleic acid; 1-10%(w/w) monoglyceride acetic acid ester and a diglyceride acetic acid ester; and 1-10%(w/w) lecithin.

Preferably, the method comprises the step of admixing: 9%(w/w) tapioca dextrin having a dextrose equivalent (DE) of 3-5%; 1.0%(w/w) gum acacia; 7.5%(w/w) sunflower oil comprising greater than 80%(w/w) oleic acid; 7.5%(w/w) monoglyceride acetic acid ester and a diglyceride acetic acid ester; and 7.5%(w/w) lecithin.

Optionally, the method further comprises the step of admixing water.

Optionally, the method comprises the step of admixing the modified starch; the gum; the fat; the emulsifier; the lubricant; and the water.

Optionally, the method comprises the step of admixing: tapioca dextrin; gum acacia; sunflower oil; monoglyceride acetic acid ester and a diglyceride acetic acid ester; lecithin, and water.

Further optionally, the method comprises the step of admixing: tapioca dextrin having a dextrose equivalent (DE) of 3-5%; gum acacia; sunflower oil comprising greater than 80%(w/w) oleic acid; monoglyceride acetic acid ester and a diglyceride acetic acid ester; lecithin, and water.

Still further optionally, the method comprises the step of admixing: 4-20%(w/w) tapioca dextrin having a dextrose equivalent (DE) of 3-5%; 0.5-10%(w/w) gum acacia; 2-15%(w/w) sunflower oil comprising greater than 80%(w/w) oleic acid; 1-10%(w/w) monoglyceride acetic acid ester and a diglyceride acetic acid ester; 1-10%(w/w) lecithin; and 40-90%(w/w) water.

Preferably, the method comprises the step of admixing: 9%(w/w) tapioca dextrin having a dextrose equivalent (DE) of 3-5%; 1.0%(w/w) gum acacia; 7.5%(w/w) sunflower oil comprising greater than 80%(w/w) oleic acid; 7.5%(w/w) monoglyceride acetic acid ester and a diglyceride acetic acid ester; 7.5%(w/w) lecithin; and 65%(w/w) water.

Optionally, the method comprises the steps of:
(i) admixing the emulsifier, the lubricant, and the fat;
(ii) admixing the water; and
(iii) admixing the modified starch and the gum.

Further optionally, the method comprises the steps of:
(i) admixing the emulsifier, the lubricant, and the fat at a temperature of at least 20°C, optionally at least 30°C, optionally at least 40°C, optionally at least 50°C, optionally at least 60°C;
(ii) admixing the water at a temperature of at least 20°C, optionally at least 30°C, optionally at least 40°C, optionally at least 50°C, optionally at least 60°C; and
(iii) admixing the modified starch and the gum at a temperature of at least 20°C, optionally at least 30°C, optionally at least 40°C, optionally at least 50°C, optionally at least 60°C.

Preferably, the method comprises the steps of:
(i) admixing the emulsifier, the lubricant, and the fat at a temperature of at least 50°C;
(ii) admixing the water at a temperature of at least 30°C; and
(iii) admixing the modified starch and the gum at a temperature of at least 20°C.

Optionally, the method comprises the additional step of homogenising the admixture.

Optionally, the method comprises the additional step of heating the admixture. Further optionally, the method comprises the additional step of heating the homogenised admixture.

Optionally, the heating step is conducted at a temperature of 140-150°C, optionally 142-148°C, optionally 144-148°C, optionally 146°C.

Preferably, the heating step is conducted at a temperature of 146°C.

Optionally, the heating step is conducted for at least 2 seconds, optionally at least 3 seconds, optionally at least 4 seconds, optionally at least 5 seconds, optionally at least 6 seconds, optionally at least 7 seconds, optionally at least 8 seconds, optionally at least 9 seconds, optionally at least 10 seconds.

Preferably, the heating step is conducted for at least 4 seconds.

Preferably, the heating step is conducted at a temperature of 146°C for at least 4 seconds.

Optionally, the method comprises the steps of:
(i) admixing the emulsifier, the lubricant, and the fat;
(ii) admixing the water;
(iii) admixing the modified starch and the gum; and
(iv) heating the admixture.

Preferably, the method comprises the steps of:
(i) admixing the emulsifier, the lubricant, and the fat at a temperature of at least 50°C;
(ii) admixing the water at a temperature of at least 30°C;
(iii) admixing the modified starch and the gum at a temperature of at least 20°C; and
(iv) heating step is conducted at a temperature of 146°C for at least 4 seconds.

Further optionally, the method comprises the steps of:
(i) admixing the emulsifier, the lubricant, and the fat;
(ii) admixing the water;
(iii) admixing the modified starch and the gum;
(iv) homogenising the admixture; and
(v) heating the homogenised admixture.

Preferably, the method comprises the steps of:
(i) admixing the emulsifier, the lubricant, and the fat at a temperature of at least 50°C;
(ii) admixing the water at a temperature of at least 30°C;
(iii) admixing the modified starch and the gum at a temperature of at least 20°C;
(iv) homogenising the admixture; and
(v) heating step is conducted at a temperature of 146°C for at least 4 seconds.

Optionally, the method further comprises the step of cooling the heated admixture. Further optionally, the method further comprises the step of cooling the heated admixture to a temperature of less than 100°C, optionally less than 90°C, optionally less than 80°C, optionally less than 70°C, optionally less than 60°C, optionally less than 50°C.

Preferably, the method further comprises the step of cooling the heated admixture to a temperature of less than 70°C.

Optionally, the method comprises the steps of:
(i) admixing the emulsifier, the lubricant, and the fat;
(ii) admixing the water;
(iii) admixing the modified starch and the gum;
(iv) heating the admixture; and
(v) cooling the admixture

Preferably, the method comprises the steps of:
(i) admixing the emulsifier, the lubricant, and the fat at a temperature of at least 50°C;
(ii) admixing the water at a temperature of at least 30°C;
(iii) admixing the modified starch and the gum at a temperature of at least 20°C;
(iv) heating at a temperature of 146°C for at least 4 seconds; and
(v) cooling the heated admixture to a temperature of less than 70°C.

Further optionally, the method comprises the steps of:
(i) admixing the emulsifier, the lubricant, and the fat;
(ii) admixing the water;
(iii) admixing the modified starch and the gum;
(iv) homogenising the admixture;
(v) heating the homogenised admixture; and
(vi) cooling the admixture.

Preferably, the method comprises the steps of:
(i) admixing the emulsifier, the lubricant, and the fat at a temperature of at least 50°C;
(ii) admixing the water at a temperature of at least 30°C;
(iii) admixing the modified starch and the gum at a temperature of at least 20°C;
(iv) homogenising the admixture;
(v) heating at a temperature of 146°C for at least 4 seconds; and
(vi) cooling the heated admixture to a temperature of less than 70°C.

Optionally, the method comprises the steps of:
(i) admixing 1-10%(w/w) monoglyceride acetic acid ester and a diglyceride acetic acid ester, 1-10%(w/w) lecithin, and 2-15%(w/w) sunflower oil comprising greater than 80%(w/w) oleic acid at a temperature of at least 50°C;
(ii) admixing 40-90%(w/w) water at a temperature of at least 30°C;
(iii) admixing 4-20%(w/w) tapioca dextrin having a dextrose equivalent (DE) of 3-5% and 0.5-10%(w/w) gum acacia at a temperature of at least 20°C;
(iv) homogenising the admixture;
(v) heating at a temperature of 146°C for at least 4 seconds; and
(vi) cooling the heated admixture to a temperature of less than 70°C.

Preferably, the method comprises the steps of:
(i) admixing 7.5%(w/w) monoglyceride acetic acid ester and a diglyceride acetic acid ester, 7.5%(w/w) lecithin, and 7.5%(w/w) sunflower oil comprising greater than 80%(w/w) oleic acid at a temperature of at least 50°C;
(ii) admixing 65%(w/w) water at a temperature of at least 30°C;
(iii) admixing 9%(w/w) tapioca dextrin having a dextrose equivalent (DE) of 3-5% and 7.5%(w/w) gum acacia at a temperature of at least 20°C;
(iv) homogenising the admixture;
(v) heating at a temperature of 146°C for at least 4 seconds; and
(vi) cooling the heated admixture to a temperature of less than 70°C.

According to a third aspect of the present invention, there is provided a method of glazing a food product, the method comprising the steps of: applying a food glaze coating composition according to the first aspect of the present invention to the food product.

Optionally, the applying step comprises spraying the food glaze coating composition to the food product.

Optionally, the applying step comprises applying 0.3-0.6%(w/w) food glaze coating composition to the food product. Further optionally, the applying step comprises spraying 0.3-0.6%(w/w) food glaze coating composition to the food product.

Optionally, the method further comprises the step of cooking the food product. Further optionally, the method further comprises the step of baking the food product.

Optionally, the method further comprises the step of cooking the food product to a temperature of greater than 65°C, optionally greater than 70°C, optionally greater than 75°C, optionally greater than 80°C, optionally greater than 85°C, optionally greater than 90°C, optionally greater than 95°C, optionally greater than 100°C, optionally greater than 105°C. Further optionally, the method further comprises the step of baking the food product to a temperature of greater than 65°C, optionally greater than 70°C, optionally greater than 75°C, optionally greater than 80°C, optionally greater than 85°C, optionally greater than 90°C, optionally greater than 95°C, optionally greater than 100°C, optionally greater than 105°C.

Optionally, the method comprises applying the food glaze coating composition following the cooking step. Further optionally, the method comprises applying the food glaze coating composition following the baking step.

Optionally, the method comprises: applying the food glaze coating composition to the food product; and cooking the glazed food product. Further optionally, the method comprises: applying the food glaze coating composition to the food product; and cooking the glazed food product.

Optionally or additionally, the method comprises applying the food glaze coating composition prior to the cooking step. Further optionally, the method comprises applying the food glaze coating composition prior to the baking step.

Optionally, the method comprises: cooking the food product; applying the food glaze coating composition to the food product; and cooking the glazed food product. Further optionally, the method comprises: baking the food product; applying the food glaze coating composition to the food product; and cooking the glazed food product.

### Brief Description of the Drawings

Embodiments of the present invention will now be described with reference to the appended nonlimiting examples and the accompanying drawings in which:
**Figure 1** illustrates the effect/performance of (A) a food glaze coating composition according to the invention and (B) a commercially-available food glazing agent; and
**Figure 2** illustrates the effect/performance of (A) a food glaze coating composition according to the invention and (B) a commercially-available food glazing agent, after toasting.

### Examples

### Example 1

### Composition of a food glaze coating composition

A food glaze coating composition was prepared comprising water, modified starch, high-oleic refined sunflower oil, acacia gum, acetic acid esters of mono-diglycerides, and sunflower lecithin, in amounts defined in Table 1. A non-silicone antifoaming agent was added in an effective inclusion level as defined in Table 1. No preservative was used in the food glaze coating composition.

**Table 1. Composition of a food glaze coating composition**

| **Ingredient** | **%(w/w)** |
|---|---|
| Water | 40.0 - 90.0 |
| Modified Starch | 4.0 - 20.0 |
| Acacia gum | 0.5 - 10.0 |
| Vegetable oil (Sunflower oil) | 2.0 - 15.0 |
| Acetic acid esters of mono-diglycerides | 1.0 - 10.0 |
| Lecithin (Sunflower) | 1.0 - 10.0 |
| Antifoam agent (Non-silicone) | 0.1 - 2.0 |
| | **100.0** |

The modified starch used is a specialty, high stability modified starch; refined from tapioca, suitable for high temperature (for example, ultra-high-temperature, UHT) procedures, and having a low percentage of reducing sugars (for example, having a DE-value of 3-5%). The film-forming properties, low glass transition temperature (*T_{g}*), and viscosity of the high stability modified tapioca starch make it effective to be used in a non-tacky, post-bake food glaze coating composition. The high stability modified starch having a low DE value can be derived from the other botanical sources such as maize (corn), waxy maize, pea and potato and optionally can be a dextrin.

Using a blend of the high stability modified tapioca starch (having a low DE-value) and gum acacia improves the film-forming characteristics and reduces the surface tackiness of the glazed food product.

The high oleic refined sunflower oil enhances the glaze shine and satin coverage but a vegetable oil from other botanical sources such as rapeseed can be used.

The acetic acid esters of mono-diglycerides and sunflower lecithin were used in this food glaze coating composition for coating/filming and emulsifications effects. The presence of the modified starch allows starch-binding emulsifiers such as sodium stearoyl lactylate (SSLs) to be avoided. In addition, the acetylated/saturated long chain C16/C18 fatty acids of the acetic acid esters of mono-diglycerides fatty acids can form a film (coat) that can be stretched up to eight times in length, and, therefore, is suitable to be used as a coating composition, whereas starch-binding emulsifiers such as SSLs do not have this coating (film formation) capability.

Antifoam is used to support the process of the liquid mix, reducing the foam formation prior to any UHT process.

### Example 2

### Manufacture of a food glaze coating composition

The ingredients defined in Table 1 were admixed in a high-shear mixer tank (APV Flex-Mix™ Liquiverter) to prepare a liquid food glaze coating composition mix for ultra-high temperature (UHT) processing. Initially, the acetic acid esters of mono-diglycerides and sunflower lecithin were melted and mixed in a high-shear mixer tank with sunflower oil at 50°C. Then, the required amount of the warm water (30°C) was added to the mix, such that the temperature of the admixture was less than 50°C. Afterwards, a mix of the modified starch and acacia gum was added to the high-shear mixer tank and allowed to form a homogenous dispersion. Finally, the obtained liquid mix was UHT treated at 146°C (typically 142-146°C) for 4 seconds, followed by cooling to 70°C and homogenisation at 150/50 bar using an APV multipurpose Ultra High Temperature (UHT) Pilot Plant (SPP2). The UHT-treated food glaze coating composition was filled in aseptic tanks and subsequently packed and stored in aseptic bags at temperature of 10-15°C. The total solids contents of the liquid food glaze coating composition mix and UHT-treated food glaze coating composition were measured using the standard oven method by oven drying for 3 hours at 105°C as described by Shreve et al., 2006, NFTA Reference Methods. National Forage Testing Association; Omaha, NE, USA: 2006. National Forage Testing Association. The pH of the liquid food glaze coating composition mix and UHT-treated food glaze coating composition was measured using a potentiometric pH-meter. Viscosity measured using the Brookfield Viscometer (Spindle 1, RPM 60%).

The food glaze coating composition had a pH of <5.0, solids content of 14-18%, and a water activity of <0.985 as tested using an AquaLab water activity meter (Model 3TE, Decagon devices, USA). The viscosity of the food glaze coating composition was typically 19-25 cP at an ambient temperature of 20°C (Spindle 1, 60% RPM, Brookfield Viscometer) which due to low viscosity can be easily sprayed using different spraying systems. A high product viscosity can create operational issues (for example, difficulties in spraying, nozzle blockage, problems in the control of the coat and shine) and are thereby not desired.

### Example 3

### Glazing food products

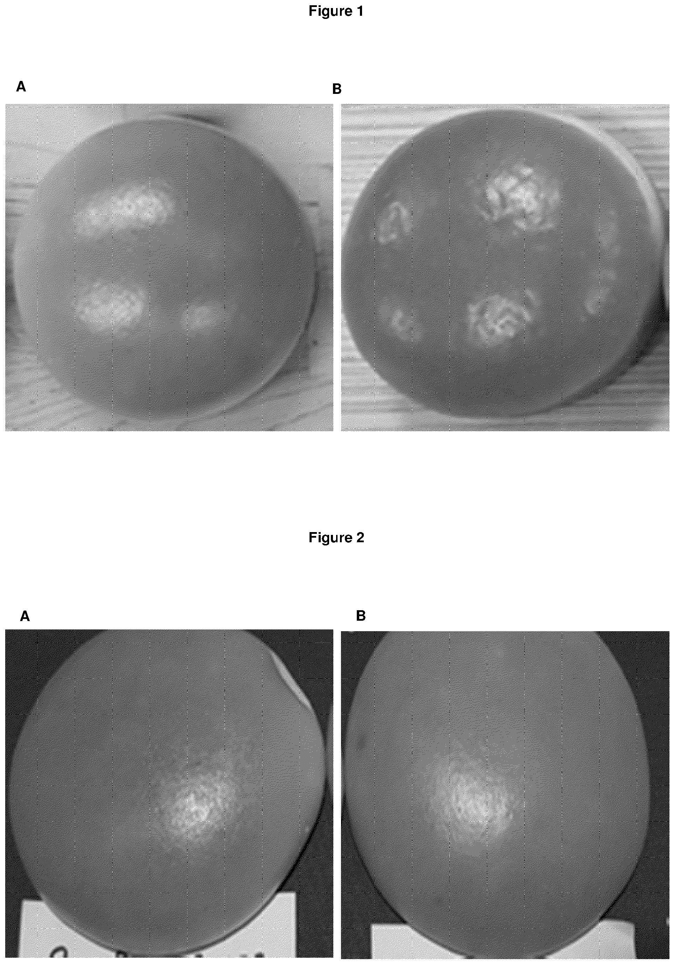

The food glaze coating composition was sprayed on top of a food product (a standard burger bun product of approximately 50g, onto which the food glaze coating composition was sprayed immediately (within 120 seconds) after exit from an oven, in which the standard burger buns were baked for 11 minutes at 220°C wherein the surface temperature was between 70-110°C (e.g. at 70, 90 and 110°C) using a hand-held spraying power tool (Black & Decker Fine Spray System) with an average glaze quantity of 0.15-0.3g (or 0.3-0.6% (*w*/*w*) of the food product). Packaging of the glazed food product started when the crumb temperature reached to <32°C. The standard burger buns were cooled, packed and divided between ambient and frozen storage. Baked standard burger buns were evaluated ambient at Day 1, Day 2 and Day 6, and defrosted after 7 days frozen storage and toasting. Baked buns were evaluated for their shine, colour, tackiness, coverage and surface (i.e. smooth or rough). Toasting step involved using a standard toaster and heating the bun up to 115°C in 60 seconds. The functionality of the food glaze coating composition was compared to a prior art protein based pre-bake glaze comprising water, vegetable protein (pea), and dextrose (Kerry commercial glaze, "Hi Glaze Brilliance™"). The results illustrated in Figure 1 is for Day 1, ambient, 90°C.

Currently, the majority of the commercially-available food glazing agents are developed for pre-bake application purposes and contain proteins, starches and/or oils as the coating agents. The commercially-available protein-free post-bake food glazing agents only had fair performance, delivering only acceptable shine over shelf-life, while also failing to maintain a non-tacky surface of the glazed food product. Significant decrease of gloss level had also been identified for all commercially-available post-bake food glazing agents. Although the food glaze coating composition is protein/dairy/egg-free (non-allergenic) and has no/limited heat treatment applied at application (post-bake), the glossy shine coat is comparable to that achieved when pre-bake protein-based food glazing agents were applied as shown in Figure 1, wherein the left panel shows food the glaze coating composition and the right panel shows the commercially-available food glazing agent.

The food glaze coating composition can form a non-tacky coat with the desirable optical characteristics (i.e., a smooth even glossy shine) upon post-bake application (see Figure 2 left panel) that are not transformed to tacky/matt after defrosting and/or toasting (see Figure 2 right panel).

The food glaze coating composition can withstand a majority of secondary heat treatment processes, for example heated to 115°C over the duration of 60 seconds; which is unique among the other food glazing agents tested. Thus, the present invention addresses the problem of shine loss of a post-bake glazed food product after toasting or other type of heat treatment when using protein-free food glaze coating composition.

Moreover, it is easier to clean up trays or surfaces because the food glaze coating composition can be applied to a food product after the food product has been heat treated (e.g. baked); thereby circumventing the food glaze coating composition being baked onto trays or surfaces and becoming difficult to remove. The food glaze coating composition therefore delivers longer turnaround of the trays due to no burning happening on the surface of the trays.

Due to the composition of the food glaze coating composition, the amount of food glaze coating composition used is reduced down to 0.3-0.6% *(w*/*w)* per application in comparison with approximately 1.0-1.5% *(w*/*w)* of commercially-available food glazing agents. In addition, the product has low viscosity when analysed using an Anton Paar viscosimeter. The viscosity of the food glaze coating composition was 21.0 cP at ambient temperature of 20°C (Spindle 1, 60% RPM, Brookfield Viscometer) making the food glaze coating composition easily sprayable using different spraying systems. A high viscosity can create application issues (i.e., difficulties in spraying, nozzle blockage, problem in the control of the coat and shine) and is therefore not desired. Furthermore, the food glaze coating composition was found to be shelf-life stable at ambient temperature up to 6 months (UHT) with the benefits of ambient storage/distribution and versatile packaging options.

Accordingly, the present invention provides a food glaze coating composition that is egg-free, non-dairy, and non-protein (non-allergenic) and ready-to-use for food products such as baking products and having desirable functionalities. Significant decrease of gloss level had been identified in all commercially-available post-bake food glazing agents after cooking such as toasting.

In application, the present invention applied after baking on surface of bun produces an even non-tacky glossy film (shine) that is not transformed to tacky/matt after toasting or defrosting. Thus, the present invention addresses consumer demand in allowing the end food product to be toasted, grilled or heat treated in other way; while maintaining shine on the food product.

In addition, the present invention is UHT processed with advantages of up to 6 months shelf-life, benefits of ambient storage/distribution, and versatile packaging options.

Furthermore, the resent invention delivers longer turnaround of the trays due to no burning happening on the surface of the trays. Based on statistical data, shelf-life of trays that went through the pre-bake glaze application reduced by 2 to 3 times compared to the standard shelf-life of 2500 bakes. Due to the formula design glaze usage is reduced down to 0.3-0.6% *(w*/*w)* per application in comparison with approximately 1.0-1.5% (*w*/*w*) of pre-bake glaze standard usage.

## Claims

1. A food glaze coating composition comprising:
(a) a modified starch;
(b) a gum;
(c) a fat;
(d) an emulsifier; and
(e) a lubricant.

2. A food glaze coating composition according to Claim 1, wherein the modified starch is a tapioca dextrin.

3. A food glaze coating composition according to Claim 1 or 2, wherein the modified starch has a dextrose equivalent (DE) of less than 20%.

4. A food glaze coating composition according to any one of Claims 1-3, wherein the food glaze coating composition comprises 4-22%(w/w) modified starch.

5. A food glaze coating composition according to any one of Claims 1-4, wherein the gum is gum arabic.

6. A food glaze coating composition according to any one of Claims 1-5, wherein the food glaze coating composition comprises 0.5-10%(w/w) gum.

7. A food glaze coating composition according to any one of Claims 1-6, wherein the fat is sunflower oil.

8. A food glaze coating composition according to any one of Claims 1-7, wherein the fat comprises greater than 80%(w/w) oleic acid.

9. A food glaze coating composition according to any one of Claims 1-8, wherein the food glaze coating composition comprises 2-15%(w/w) fat.

10. A food glaze coating composition according to any one of Claims 1-9, wherein the emulsifier comprises a monoglyceride acetic acid ester and a diglyceride acetic acid ester.

11. A food glaze coating composition according to any one of Claims 1-10, wherein the food glaze coating composition comprises 1-10%(w/w) emulsifier.

12. A food glaze coating composition according to any one of Claims 1-9, wherein the lubricant is lecithin.

13. A food glaze coating composition according to any one of Claims 1-12, wherein the food glaze coating composition comprises 1-10%(w/w) lubricant.

14. A food glaze coating composition according to any one of Claims 1-13, wherein the food glaze coating composition further comprises 0.1-2.0%(w/w) antifoaming agent.

15. A method of manufacturing a food glaze coating composition according to any one of Claims 1-14, the method comprising the steps of:
(a) admixing the emulsifier, the lubricant, and the fat at a temperature of at least 20°C;
(b) admixing water at a temperature of at least 20°C;
(c) admixing the modified starch and the gum at a temperature of at least 20°C; and
(d) heating the admixture a temperature of 140-150°C for at least 2 seconds.
